# EUROPEAN PATENT APPLICATION

(11) **EP 2 034 759 A1**
(43) Date of publication of application: **11.03.2009**
(21) Application number: 07745311.6
(22) Date of filing: 14.06.2007
(51) Int. Cl.: H04Q 7/36, H04B 7/26, H04J 1/00, H04J 11/00

(54) **BASE STATION, COMMUNICATION TERMINAL, TRANSMISSION METHOD, AND RECEPTION METHOD**

(30) Priority: 19.06.2006 JP 2006169448
(71) Applicant: NTT DoCoMo, Inc., Chiyoda-ku Tokyo 100-6150 (JP)
(72) Inventor: MIKI, Nobuhiko, Chiyoda-ku, Tokyo 100-6150 (JP); HIGUCHI, Kenichi, Chiyoda-ku, Tokyo 100-6150 (JP); SAWAHASHI, Mamoru, Chiyoda-ku, Tokyo 100-6150 (JP)
(74) Representative: HOFFMANN EITLE
(86) International application number: PCT/JP2007/062054
(87) International publication number: WO 2007/148610

(57) **Abstract**

A disclosed base station employs a multicarrier scheme and performs frequency scheduling in a frequency band including multiple resource blocks each including one or more subcarriers. The base station includes a frequency scheduler for receiving channel condition information from communication terminals and generating scheduling information to allocate resource blocks to selected communication terminals having good channel conditions based on the channel condition information; a coding and modulation unit for encoding and modulating control channels including a general control channel to be decoded by the communication terminals and specific control channels to be decoded by the selected communication terminals; a multiplexing unit for time-division-multiplexing the general control channel and the specific control channels according to the scheduling information; and a transmitting unit for transmitting the time-division-multiplexed signal according to the multicarrier scheme. The coding and modulation unit encodes the general control channel separately for the respective communication terminals.

## Description

### TECHNICAL FIELD

The present invention generally relates to wireless communication technologies. More particularly, the present invention relates to a base station, a communication terminal, a transmission method, and a reception method used in a communication system where frequency scheduling and multicarrier transmission are performed.

### BACKGROUND ART

In the field of wireless communication, there is a growing demand for a broadband wireless access system that can efficiently perform high-speed, high-volume communications. For downlink channels in such a system, a multicarrier scheme such as orthogonal frequency division multiplexing (OFDM) appears to be promising for achieving high-speed, high-volume communications while effectively restraining multipath fading. Also, in next generation systems, use of frequency scheduling is proposed to improve the frequency efficiency and thereby to increase the throughput.

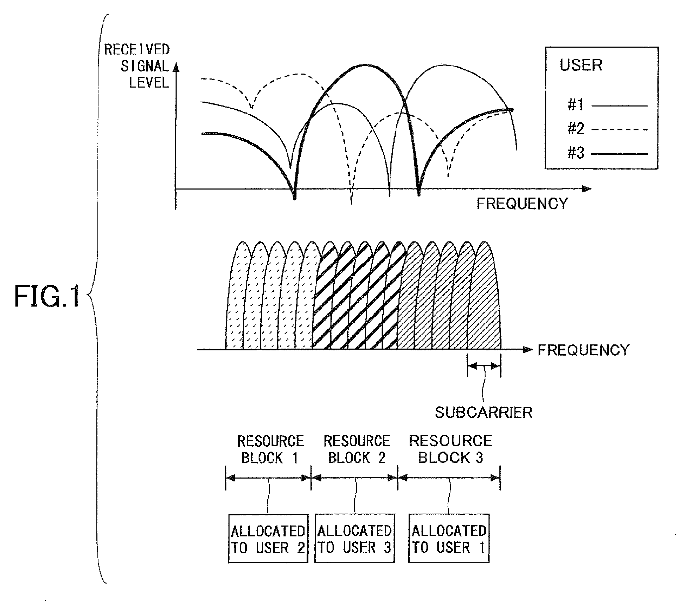

As shown in FIG. 1, in next generation systems, a system frequency band is divided into multiple resource blocks (in this example, three resource blocks) each including one or more subcarriers. The resource blocks are also called frequency chunks. Each terminal is allocated one or more resource blocks. In a frequency scheduling method, to improve the transmission efficiency or the throughput of the entire system, resource blocks are allocated preferentially to terminals with good channel conditions according to received signal quality or channel quality indicators (CQIs) of downlink pilot channels reported by the terminals for the respective resource blocks. When frequency scheduling is employed, it is necessary to provide the terminals with scheduling information indicating the result of scheduling. The scheduling information is reported to the terminals via control channels (may also be called L1/L2 control signaling channels or associated control channels). The control channels are also used to report modulation schemes (e.g., QPSK, 16 QAM, or 64 QAM) and channel coding information (e.g., channel coding rates) used for the scheduled resource blocks as well as information regarding hybrid automatic repeat request (HARQ). A method of dividing a frequency band into multiple resource blocks and using different modulation schemes for the respective resource blocks is, for example, disclosed in "A Practical Discrete Multitone Transceiver Loading Algorithm for Data Transmission over Spectrally Shaped Channel", P. Chow, J.Cioffi, J.Bingham, IEEE Trans. Commun. vol. 43, No. 2/3/4, February/March/April 1995.

### DISCLOSURE OF INVENTION

### PROBLEMS TO BE SOLVED BY THE INVENTION

The above background art technologies have problems as described below.

In a next generation wireless access system, various frequency bands, broad and narrow, may be employed and terminals may be required to use such various frequency bands depending on their locations or applications. For example, various reception frequency bands may be provided for terminals for different applications or at different prices. Also in this case, appropriate frequency scheduling makes it possible to improve the frequency efficiency and the throughput. However, because conventional communication systems are designed to use a fixed frequency band, no concrete method has been established yet for appropriately reporting scheduling information to terminals or users in a system where frequency bands with various bandwidths are provided for the base station and the terminals and all combinations of the frequency bands are allowed.

When a resource block common to all terminals is statically allocated to a control channel, it may happen that some terminals cannot receive the control channel with good quality because channel conditions of a resource block differ from terminal to terminal. Meanwhile, distributing a control channel to all resource blocks may make it possible for all terminals to receive the control channel with certain reception quality. However, with this method, it is difficult to further improve the reception quality. For these reasons, there is a demand for a method of transmitting a control channel with higher quality.

In a system where adaptive modulation and coding (AMC) is employed, i,e., where the modulation scheme and the channel coding rate used for a control channel are adaptively changed, the number of symbols used to transmit the control channel differs from terminal to terminal. This is because the amount of information transmitted per symbol varies depending on the combination of the modulation scheme and the channel coding rate. For a next generation system, it is also being discussed to send and receive different signals by multiple antennas provided at the sending and receiving ends. In this case, control information such as scheduling information may be necessary for each of the signals transmitted by the respective antennas. In other words, in such a system, the number of symbols necessary to transmit a control channel may differ from terminal to terminal and also differ depending on the number of antennas used by the terminal. When the amount of information to be transmitted via a control channel differs from terminal to terminal, it is preferable to use a variable format that can flexibly accommodate various amounts of control information to improve resource use efficiency. However, using a variable format may increase the signal processing workload at the sending and receiving ends. Meanwhile, when a fixed format is used, it is necessary to set the length of a control channel field to accommodate the maximum amount of control information. In this case, even if a control channel occupies only a part of the control channel field, the resources of the remaining part of the control channel field cannot be used for data transmission and as a result, the resource use efficiency is reduced. For these reasons, there is a demand for a method to transmit a control channel in a simple and highly efficient manner.

Embodiments of the present invention make it possible to solve or reduce one or more problems caused by the limitations and disadvantages of the background art. One object of the present invention is to provide a base station, a communication terminal, a transmission method, and a reception method that make it possible to efficiently transmit control channels to terminals supporting different bandwidths in a communication system where each of multiple frequency blocks constituting a system frequency band includes multiple resource blocks each including one or more subcarriers and each of the terminals communicates using one or more of the frequency blocks.

### MEANS FOR SOLVING SHE PROBLEMS

According to an aspect of the present invention, a base station employs a multicarrier scheme and is designed to perform frequency scheduling in a frequency band including multiple resource blocks each including one or more subcarriers. The base station includes a frequency scheduler configured to receive channel condition information from communication terminals and to generate scheduling information to allocate one or more of the resource blocks to each of selected ones of the communication terminals having good channel conditions based on the channel condition information; a coding and modulation unit configured to encode and modulate control channels including a general control channel to be decoded by the communication terminals and specific control channels to be decoded by the selected ones of the communications terminals that are allocated one or more of the resource blocks; a multiplexing unit configured to time-division-multiplex the general control channel and the specific control channels according to the scheduling information; and a transmitting unit configured to transmit an output signal from the multiplexing unit according to the multicarrier scheme; wherein the coding and modulation unit is configured to encode the general control channel separately for the respective communication terminals.

Another aspect of the present invention provides a transmission method used by a base station employing a multicarrier scheme and designed to perform frequency scheduling. The transmission method includes the steps of receiving channel condition information from communication terminals and generating scheduling information to allocate one or more of resource blocks each including one or more subcarriers to each of selected ones of the communication terminals having good channel conditions based on the channel condition information; encoding and modulating control channels including a general control channel to be decoded by the communication terminals and specific control channels to be decoded by the selected ones of the communication terminals that are allocated one or more of the resource blocks, wherein the general control channel is encoded separately for the respective communication terminals; time-division-multiplexing the general control channel and the specific control channels according to the scheduling information; and transmitting the time-division-multiplexed signal according to the multicarrier scheme.

Another aspect of the present invention provides a communication terminal used in a communication system where a multicarrier scheme is employed and frequency scheduling is performed. The communication terminal includes a receiving unit configured to receive control channels including a general control channel to be decoded by communication terminals and specific control channels to be decoded by selected ones of the communication terminals to each of which one or more resource blocks are allocated; a separating unit configured to separate the general control channel and the specific control channels that are time-division-multiplexed; a control channel decoding unit configured to decode the general control channel and to decode a corresponding one of the specific control channels that is mapped to the one or more of the resource blocks allocated to the own communication terminal based on resource block allocation information in the general control channel; and a data channel decoding unit configured to decode a data channel transmitted using the one or more of the resource blocks allocated to the own communication terminal.

Still another aspect of the present invention provides a reception method used by a communication terminal in a communication system where a multicarrier scheme is employed and frequency scheduling is performed. The reception method includes the steps of receiving control channels including a general control channel to be decoded by communication terminals and specific control channels to be decoded by selected ones of the communication terminals to each of which one or more resource blocks are allocated; separating the general control channel and the specific control channels that are time-division-multiplexed; decoding the general control channel and decoding a corresponding one of the specific control channels that is mapped to the one or more of the resource blocks allocated to the own communication terminal based on resource block allocation information in the general control channel; and decoding a data channel transmitted using the one or more of the resource blocks allocated to the own communication terminal.

### ADVANTAGEOUS AFFECT OF THE INVENTION

Embodiments of the present invention provide a base station, a communication terminal, a transmission method, and a reception method that make it possible to efficiently transmit control channels to communication terminals supporting different bandwidths in a communication system where each of multiple frequency blocks constituting a system frequency band includes multiple resource blocks each including one or more subcarriers.

### BRIER DESCRIPTION OF THE DRAWING

FIG. 1 is a drawing used to describe frequency scheduling;
FIG. 2 is a drawing illustrating a frequency band used in an embodiment of the present invention;
FIG. 3 is a partial block diagram of a base station according to an embodiment of the present invention;
FIG. 4A is a drawing illustrating signal processing elements for one frequency block;
FIG. 4B is a drawing illustrating signal processing elements for processing control channels;
FIG. 4C is a drawing illustrating signal processing elements for processing control channels;
FIG. 4D is a drawing illustrating signal processing elements for processing control channels;
FIG. 4E is a drawing illustrating signal processing elements for for processing control channels;
FIG. 5 is a table showing exemplary information items of control signaling channels;
FIG. 6 is a drawing illustrating a unit of error correction coding;
FIG. 7A is a drawing illustrating exemplary mapping of data channels and control channels;
FIG. 7B is a drawing illustrating exemplary mapping of data channels and control channels;
FIG. 7C is a drawing illustrating exemplary mapping of data channels and control channels;
FIG. 7D is a drawing illustrating exemplary mapping of data channels and control channels;
FIG. 7E is a drawing illustrating exemplary mapping of data channels and control channels;
FIG. 7F is a drawing illustrating exemplary mapping of data channels and control channels;
FIG. 7G is a drawing illustrating exemplary grouping of users in a cell;
FIG. 8 is a partial block diagram of a terminal according to an embodiment of the present invention;
FIG. 9 is a flowchart showing operations of a base station and a mobile terminal according to an embodiment of the present invention;
FIG. 10 is a drawing illustrating an example of transmission power control (TPC);
FIG. 11 is a drawing illustrating an example of transmission power control (TPC);
FIG. 12 is a drawing illustrating an example of adaptive modulation and coding (AMC);
FIG. 13 is a drawing illustrating an example of adaptive modulation and coding (AMC);
FIG. 14 is a drawing illustrating an example where both TPC and AMC are performed;
FIG. 15A is a drawing illustrating an example of error detection coding;
FIG. 15B is a drawing illustrating an example of error detection coding; and
FIG. 15C is a drawing illustrating an example of error detection coding.

### EXPLANATION OF REFERENCES

- 31: Frequency block allocation control unit
- 32: Frequency scheduling unit
- 33-x: Control signaling channel generating unit for frequency block x
- 34-x: Data channel generating unit for frequency block x
- 35: Broadcast channel (or paging channel) generating unit
- 1-x: First multiplexing unit for frequency block x
- 37: Second multiplexing unit
- 38: Third multiplexing unit
- 39: Other channels generating unit
- 40: Inverse fast Fourier transform unit
- 50: Cyclic prefix adding unit
- 41: General control channel generating unit
- 42: Specific control channel generating unit
- 43: Multiplexing unit
- 81: Carrier frequency tuning unit
- 82: Filtering unit
- 83: Cyclic prefix removing unit
- 84: Fast Fourier transform unit (FFT)
- 85: CQI measuring unit
- 86: Broadcast channel decoding unit
- 87: General control channel decoding unit
- 88: Specific control channel decoding unit
- 89: Data channel decoding unit

### BEST MODE FOR CARRYING OUT THE INVENTION

The best mode for carrying out the invention is described based on the following embodiments with reference to the accompanying drawings.

Throughout the accompanying drawings, the same reference numbers are used for parts having the same functions, and overlapping descriptions of those parts are omitted.

### <FIRST EMBODIMENT>

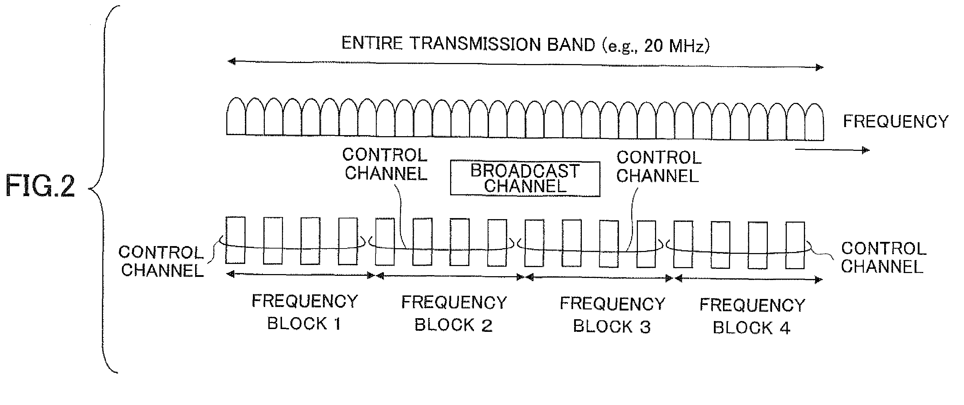

FIG. 2 is a drawing illustrating a frequency band used in an embodiment of the present invention. Values used in the descriptions below are just examples and different values may be used. In this example, a frequency band (entire transmission band) allocated to a communication system has a bandwidth of 20 MHz. The entire transmission band includes four frequency blocks 1 through 4. Each of the frequency blocks includes multiple resource blocks each including one or more subcarriers. FIG. 2 schematically shows frequency blocks each including multiple subcarriers. In this embodiment, four different communication bandwidths of 5 MHz, 10 MHz, 15 MHz, and 20 MHz are provided. A communication terminal performs communications using one or more frequency blocks and one of the four bandwidths. A communication terminal in the communication system may support all four bandwidths or support one or more of the four bandwidths. Each communication terminal at least supports the 5 MHz bandwidth.

In this embodiment, control channels (L1/L2 control signaling channels) for reporting scheduling information of data channels (shared data channels) to terminals are transmitted using the minimum bandwidth (5 MHz) and are provided for each frequency block. For example, when a terminal supporting a 5 MHz bandwidth performs communications using frequency block 1, the terminal receives control channels provided for frequency block 1 and thereby obtains scheduling information. Information indicating which terminals can use which frequency blocks may be reported in advance to the terminals, for example, via a broadcast channel. The frequency blocks used by the terminals may be changed after communications are started. Similarly, when a terminal supporting a 10 MHz bandwidth performs communications using adjacent frequency blocks 1 and 2, the terminal receives control channels provided for frequency blocks 1 and 2 and thereby obtains scheduling information for the 10 MHz bandwidth. When a terminal supporting a 15 MHz bandwidth performs communications using adjacent frequency blocks 1, 2, and 3, the terminal receives control channels provided for frequency blocks 1, 2, and 3 and thereby obtains scheduling information for the 15 MHz bandwidth. When a terminal supporting a 20 MHz bandwidth performs communications, the terminal receives control channels provided for all the frequency blocks and thereby obtains scheduling information for the 20 MHz bandwidth

In FIG. 2, four discrete blocks labeled "control channel" are shown in each frequency block. This indicates that control channels are mapped to multiple resource blocks in the corresponding frequency block. Details of mapping control channels are described later.

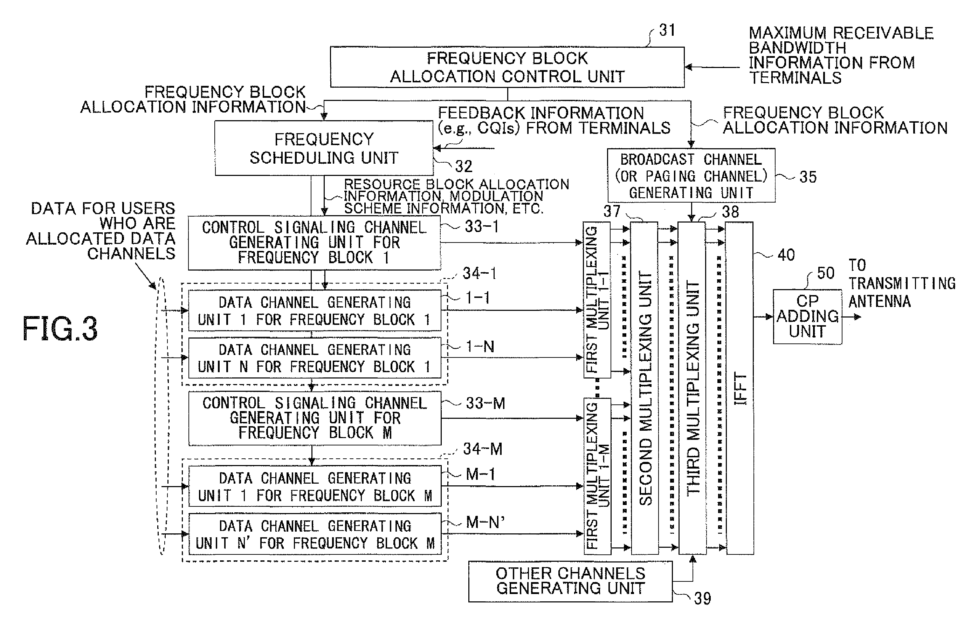

FIG. 3 is a partial block diagram of a base station according to an embodiment of the present invention. The base station shown in FIG. 3 includes a frequency block allocation control unit 31; a frequency scheduling unit 32; a control signaling channel generating unit 33-1 and a data channel generating unit 34-1 for frequency block 1, ..., a control signaling channel generating unit 33-M and a data channel generating unit 34-M for frequency block M; a broadcast channel (or paging channel) generating unit 35; a first multiplexing unit 1-1 for frequency block 1, ..., a first multiplexing unit 1-M for frequency block M; a second multiplexing unit 37; a third multiplexing unit 38; an other channels generating unit 39; an inverse fast Fourier transform unit (IFFT) 40; and a cyclic prefix (CP) adding unit 50.

The frequency block allocation control unit 31 determines a frequency block(s) to be used by a terminal (a mobile terminal or a fixed terminal) based on information regarding the maximum supported bandwidth reported by the terminal. The frequency block allocation control unit 31 manages the correspondence between respective terminals and frequency blocks and sends the correspondence information to the frequency scheduling unit 32. The correspondence between frequency blocks and terminals supporting different bandwidths may be reported in advance to the terminals via a broadcast channel. For example, the frequency block allocation control unit 31 allows a user communicating with a 5 MHz bandwidth to use any one or a specific one of frequency blocks 1 through 4. For a user communicating with a 10 MHz bandwidth, the frequency block allocation control unit 31 allows the use of two adjacent frequency blocks, i.e., frequency blocks "1 and 2", "2 and 3", or "3 and 4". The frequency block allocation control unit 31 may allow the user to use any one or a specific one of the combinations. For a user communicating with a 15 MHz bandwidth, the frequency block allocation control unit 31 allows the use of three adjacent frequency blocks, i.e., frequency blocks "1, 2, and 3" or "2, 3, and 4". The frequency block allocation control unit 31 may allow the user to use any one or a specific one of the combinations. For a user communicating with a 20 MHz bandwidth, the frequency block allocation control unit 31 allows the use of all frequency blocks. As described later, frequency blocks allowed to be used by a user may be changed after communications are started according to a frequency hopping pattern.

The frequency scheduling unit 32 performs frequency scheduling for each of the frequency blocks. The frequency scheduling unit 32 performs frequency scheduling for each frequency block based on channel quality indicators (CQIs) reported by terminals for respective resource blocks such that the resource blocks are allocated preferentially to terminals with good channel conditions, and generates scheduling information based on the scheduling results.

The control signaling channel generating unit 33-1 for frequency block 1 generates control signaling channels for reporting scheduling information of frequency block 1 to terminals and maps the control signaling channels to resource blocks within frequency block 1. Similarly, each of the control signaling channel generating units 33 for other frequency blocks generates control signaling channels for reporting scheduling information of the corresponding frequency block to terminals and maps the control signaling channels to resource blocks within the frequency block.

The data channel generating unit 34-1 for frequency block 1 generates data channels each of which is to be transmitted using one or more resource blocks in frequency block 1. Frequency block 1 may be shared by one or more terminals (users). Therefore, in this example, the data channel generating unit 34-1 for frequency block 1 includes N data channel generating units 1-1 through 1-N. Similarly, each of the data channel generating units 34 for other frequency blocks generates data channels for terminals sharing the corresponding frequency block.

The first multiplexing unit 1-1 for frequency block 1 multiplexes signals to be transmitted using frequency block 1. This multiplexing includes at least frequency division multiplexing. Multiplexing of control signaling channels and data channels are described later in more detail. Similarly, each of the first multiplexing units 1 for other frequency blocks multiplexes control signaling channels and data channels to be transmitted using the corresponding frequency block.

The second multiplexing unit 37 changes positional relationships of the first multiplexing units 1-x (x=1, ..., M) on the frequency axis according to a hopping pattern. Details of this process are described in the second embodiment.

The broadcast channel (or paging channel) generating unit 35 generates broadcast information such as office data to be reported to terminals covered by the base station. The broadcast information may include information indicating the correspondence between maximum supported bandwidths of terminals and usable frequency blocks. If the usable frequency blocks are to be changed, the broadcast information may also include information specifying a hopping pattern indicating how the frequency blocks are changed. A paging channel may be transmitted using the same frequency band as that used for the broadcast channel or using frequency blocks used by the respective terminals.

The other channels generating unit 39 generates channels other than control signaling channels and data channels. For example, the other channels generating unit 39 generates a pilot channel.

The third multiplexing unit 38 multiplexes control signaling channels and data channels of the frequency blocks and if necessary, also a broadcast channel and/or other channels.

The inverse fast Fourier transform unit 40 inverse-fast-Fourier-transforms a signal output from the third multiplexing unit 38 and thereby OFDM-modulates the signal.

The cyclic prefix adding unit 50 generates transmission symbols by attaching guard intervals to OFDM-modulated symbols. A transmission symbol is, for example, generated by duplicating a series of data at the end (or head) of an OFDM-modulated symbol and attaching the duplicated data to the head (or end) of the OFDM-modulated symbol.

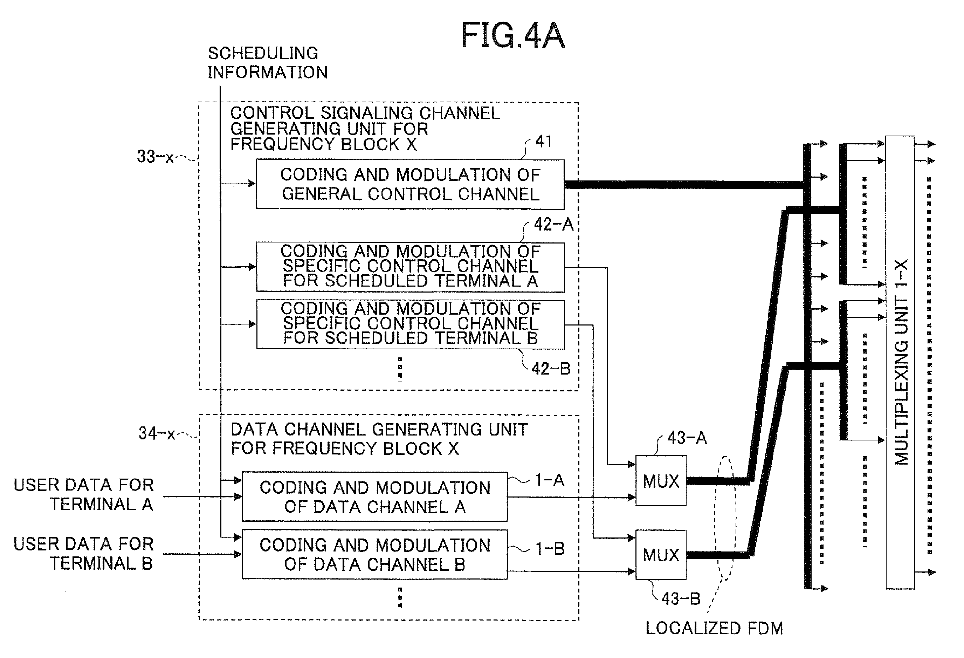

FIG. 4A is a drawing illustrating signal processing elements for one frequency block (xth frequency block). In FIG. 4A, "x" indicates an integer greater than or equal to 1 and less than or equal to M. The signal processing elements for frequency block x include a control signaling channel generating unit 33-x, a data channel generating unit 34-x, multiplexing units 43-A, 43-B, ..., and a multiplexing unit 1-x. The control signaling channel generating unit 33-x includes a general control channel generating unit 41 and one or more specific control channel generating units 42-A, 42-B, ....

The general control channel generating unit 41 performs channel coding and multilevel modulation on a general control channel (may also be called general control information), which is a part of control signaling channels and to be decoded and demodulated by all terminals using the corresponding frequency block, and outputs the general control channel.

Each of the specific control channel generating units 42 performs channel coding and multilevel modulation on a specific control channel (may also be called specific control information), which is a part of control signaling channels and is decoded and demodulated by a terminal to which one or more resource blocks in the corresponding frequency block are allocated, and outputs the specific control channel.

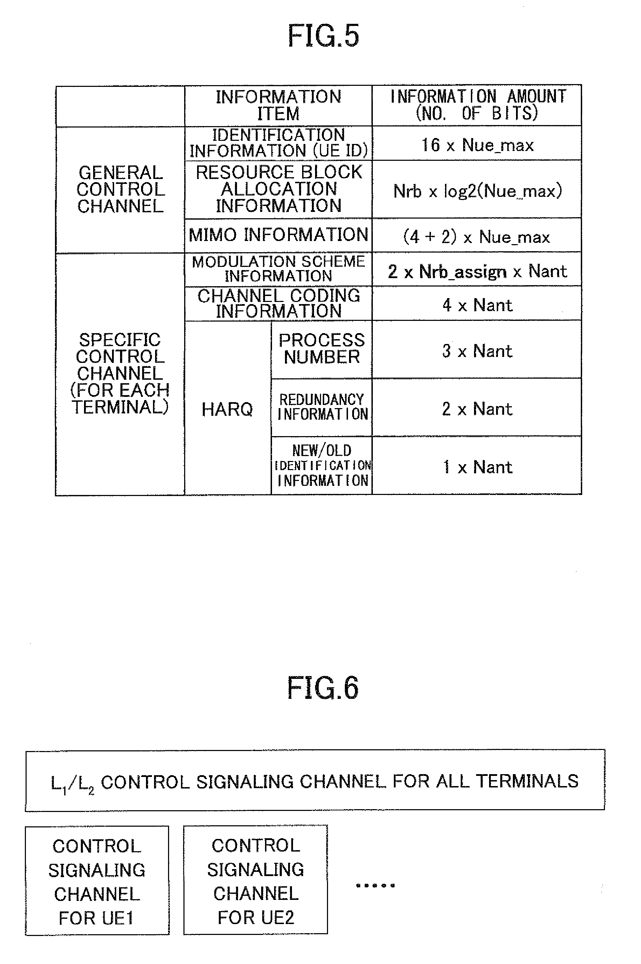

FIG. 5 shows exemplary information items of control signaling channels and the numbers of bits required for the respective information items. A downlink control signaling channel may include uplink information in addition to downlink information. However, for brevity, the uplink information and the downlink information are not distinguished in this example. Normally, a general control channel includes terminal identification information, resource block allocation information, and antenna number information. For example, the terminal identification information requires 16 x Nue_max bits when identification information for each terminal is represented by 16 bits. Nue_max indicates the maximum number of terminals that can be accommodated in the frequency block. The resource block allocation information requires Nrb x log2(Nue_max) bits where Nrb indicates the number of resource blocks in the frequency block. The antenna number information indicates the numbers of antennas used by sending and receiving ends in a multiple-input and multiple-output (MIMO) system where multi-antenna devices are used.

The specific control channel includes modulation scheme information, channel coding information, and hybrid automatic repeat request (HARQ) information for the corresponding terminal. The modulation scheme information indicates a modulation scheme (e.g., QPSK, 16 QAM, or 64 QAM) used for modulating a data channel. Nrb_assign indicates the number of resource blocks allocated to the terminal, and Nant indicates the number of transmitting antennas used by the terminal for transmission. The channel coding information indicates an error correction coding scheme (e.g., channel coding rate) used for a data channel. The HARQ information includes process numbers, redundancy information, and new/old identification information indicating whether it is a new packet or a redundant packet. Information items and the numbers of bits shown in FIG. 5 are just examples. A control signaling channel may include any number of information items and the numbers of bits may be determined freely.

Referring back to FIG. 4A, the data channel generating unit 34-x includes data channel generating units 1-A, 1-B, ... that perform channel coding and multilevel modulation on data channels of terminals A, B, ..., respectively. Information regarding the channel coding and the multilevel modulation is included in the specific control channel described above.

The multiplexing units 43 map specific control channels and data channels of the terminals to the corresponding resource blocks allocated to the terminals.

As described above, the general control channel generating unit 41 encodes (and modulates) the general control channel and the specific control channel generating units 42 encode (and modulate) the respective specific control channels. Accordingly, as schematically shown in FIG. 6, the general control channel of this embodiment includes sets of information for all users who are allocated frequency block x and the sets of information are collectively error-correction-coded. In this case, a user cannot uniquely identify a block in the error-correction-coded channel where the information for the user is contained. Therefore, the user has to decode and demodulate the general control channel including the sets of information for all users. Alternatively, the general control channel may be error-correction-coded for each user. In this case, because encoding is performed for each user, it is comparatively easy to add or change users.

Meanwhile, the specific control channels include only information for users to which resource blocks are actually allocated and are therefore error-correction-coded for the respective users. Each user determines whether a resource block(s) has been allocated by decoding and demodulating the general control channel. Accordingly, only users who are allocated resource blocks decode the specific control channels. The channel coding rates and modulation schemes for the specific control channels are changed during communications as needed. On the other hand, the channel coding rate and the modulation scheme for the general control channel may be fixed. Even in this case, it is preferable to perform transmission power control (TPC) to achieve desired signal quality.

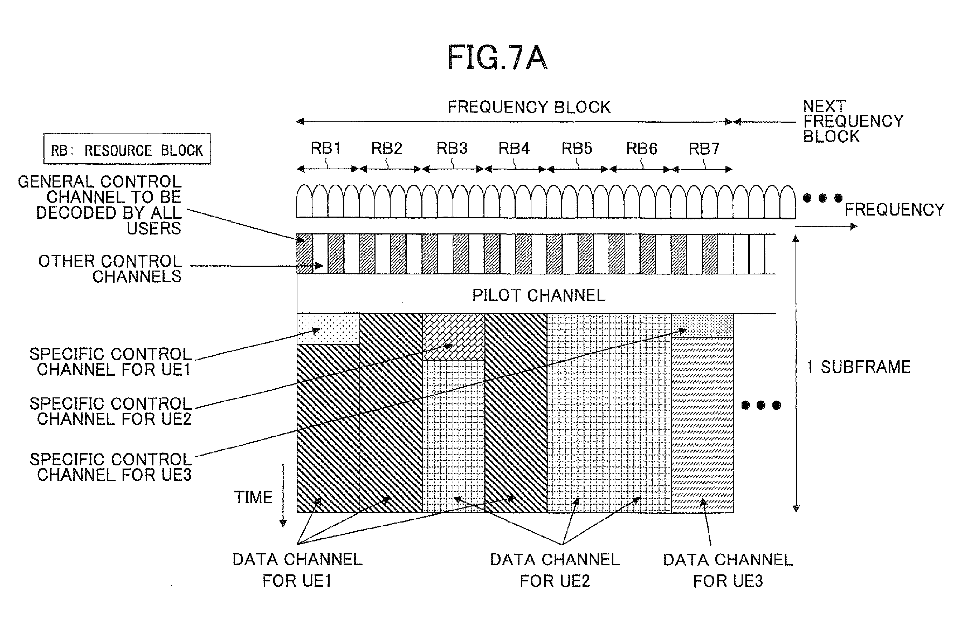

FIG. 7A is a drawing illustrating exemplary mapping of data channels and control channels. This example shows channel mapping within one frequency block and one subframe and roughly corresponds to an output from the first multiplexing unit 1-x (except the pilot channel and other channels that are multiplexed by the third multiplexing unit 38). One subframe may correspond to one transmission time interval (TTI) or to multiple TTIs. In this example, a frequency block includes seven resource blocks RB1 through RB7. The seven resource blocks are allocated to terminals with good channel conditions by the frequency scheduling unit 32 shown in FIG. 3.

Normally, the general control channel, the pilot channel, and the data channels are time-division-multiplexed. The general control channel is mapped to resources distributed across the entire frequency block. In other words, the general control channel is distributed across a frequency band composed of seven resource blocks. In this example, the general control channel and other control channels (excluding the specific control channels) are frequency-division-multiplexed. The other control channels, for example, include a synchronization channel. As shown in FIG. 7A, the general control channel and the other control channels are frequency-division-multiplexed such that each of the channels is mapped to multiple frequency components arranged at intervals. Such a multiplexing scheme is called distributed frequency division multiplexing (FDM). The frequency components allocated to the respective channels may be arranged at the same intervals or at different intervals. In either case, it is necessary to distribute the general control channel across the entire frequency block.

In this example, the pilot channel is also mapped to frequency components throughout the entire frequency block. Mapping a pilot channel to a wide frequency range as shown in FIG. 7A is preferable to accurately perform channel estimation for various frequency components.

In FIG. 7A, resource blocks RB1, RB2, and RB4 are allocated to user 1 (UE1), resource blocks RB3, RB5, and RB6 are allocated to user 2 (UE2), and resource block RB7 is allocated to user 3 (UE3). As described above, resource block allocation information is included in the general control channel. The specific control channel for user 1 is mapped to the beginning of resource block RB1 that is allocated to user 1. The specific control channel for user 2 is mapped to the beginning of resource block RB3 that is allocated to user 2. The specific control channel for user 3 is mapped to the beginning of resource block RB7 that is allocated to user 3. Note that, in FIG. 7A, the sizes of the portions occupied by the respective specific control channels of users 1, 2, and 3 are not equal. This indicates that the amount of information in the specific control channel may vary depending on the user. The specific control channel is mapped locally to resources within a resource block allocated to the corresponding data channel. In contrast with the distributed FDM where a channel is mapped to resources distributed across multiple resource blocks, this mapping scheme is called localized frequency division multiplexing (FDM).

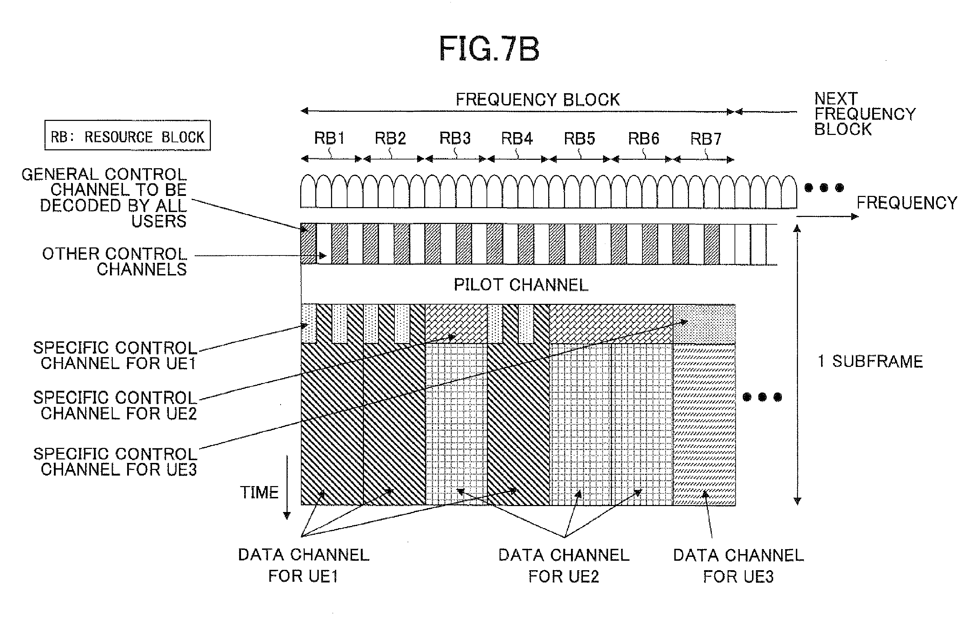

FIG. 7B shows another example of mapping specific control channels. In FIG. 7A, the specific control channel for user 1 (UE1) is mapped only to resource block RB1. In FIG. 7B, the specific control channel for user 1 is mapped to resources discretely distributed across resource blocks RB1, RB2, and RB4 (across all the resource blocks allocated to user 1) by distributed FDM. The specific control channel for user 2 (UE2) is also mapped to resources distributed across resource blocks RB3, RB5, and RB6 in a manner different from that shown in FIG. 7A. The specific control channel and the shared data channel of user 2 are time-division-multiplexed. Thus, a specific control channel and a shared data channel of a user may be multiplexed in the entirety or a part of one or more resource blocks allocated to the user by time division multiplexing and/or frequency division multiplexing (localized FDM or distributed FDM). Mapping a specific control channel to resources distributed across two or more resource blocks makes it possible to achieve frequency diversity gain for the specific control channel and thereby to improve the reception quality of the specific control channel.

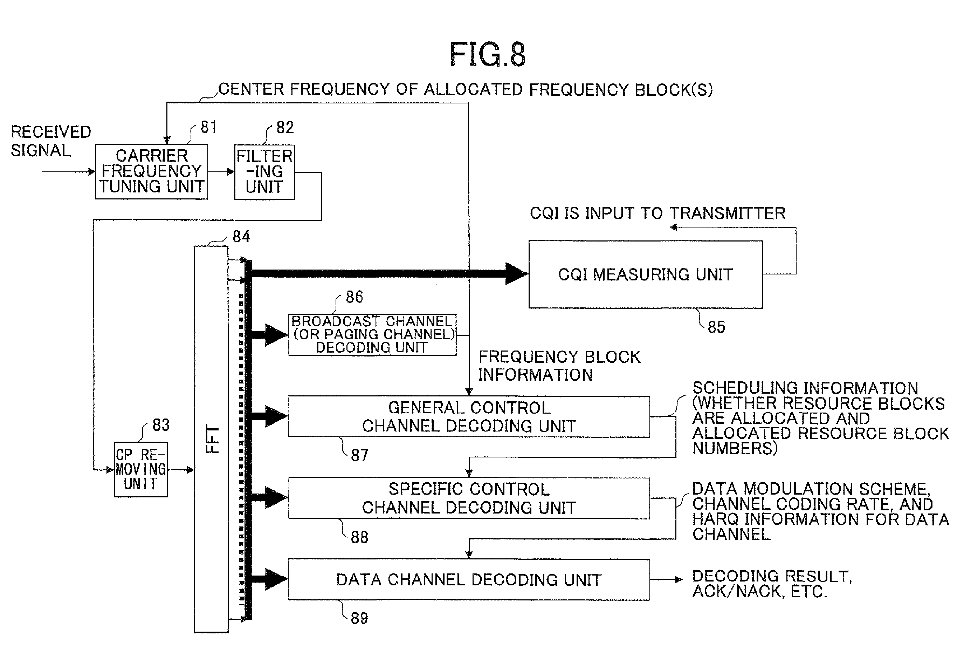

FIG. 8 is a partial block diagram of a mobile terminal according to an embodiment of the present invention. The terminal shown in FIG. 8 includes a carrier frequency tuning unit 81, a filtering unit 82, a cyclic prefix (CP) removing unit 83, a fast Fourier transform unit (FFT) 84, a CQI measuring unit 85, a broadcast channel (or paging channel) decoding unit 86, a general control channel decoding unit 87, a specific control channel decoding unit 88, and a data channel decoding unit 89.

The carrier frequency tuning unit 81 appropriately adjusts the center frequency of the reception band so as to be able to receive a signal of a frequency block allocated to the terminal.

The filtering unit 82 filters the received signal.

The cyclic prefix removing unit 83 removes guard intervals from the received signal and thereby extracts effective symbols from received symbols.

The fast Fourier transform unit (FFT) 84 fast-Fourier-transforms information in the effective symbols and thereby OFDM-demodulates the information.

The CQI measuring unit 85 measures the received power of a pilot channel in the received signal and feeds back the measurement as a channel quality indicator (CQI) to the base station. The CQI is measured for each resource block in the frequency block and all of the measured CQIs are reported to the base station.

The broadcast channel (or paging channel) decoding unit 86 decodes a broadcast channel. The broadcast channel (or paging channel) decoding unit 86 also decodes a paging channel if it is included.

The general control channel decoding unit 87 decodes a general control channel in the received signal and thereby extracts scheduling information. The scheduling information includes information indicating whether resource blocks are allocated to a shared data channel for the terminal and if resource blocks are allocated, also includes the corresponding resource block numbers.

The specific control channel decoding unit 88 decodes a specific control channel in the received signal. The specific control channel includes a data modulation scheme, a channel coding rate, and HARQ information for the shared data channel.

The data channel decoding unit 89 decodes the shared data channel in the received signal based on information extracted from the specific control channel. The terminal may be configured to report acknowledge (ACK) or negative acknowledge (NACK) to the base station according to the result of decoding.

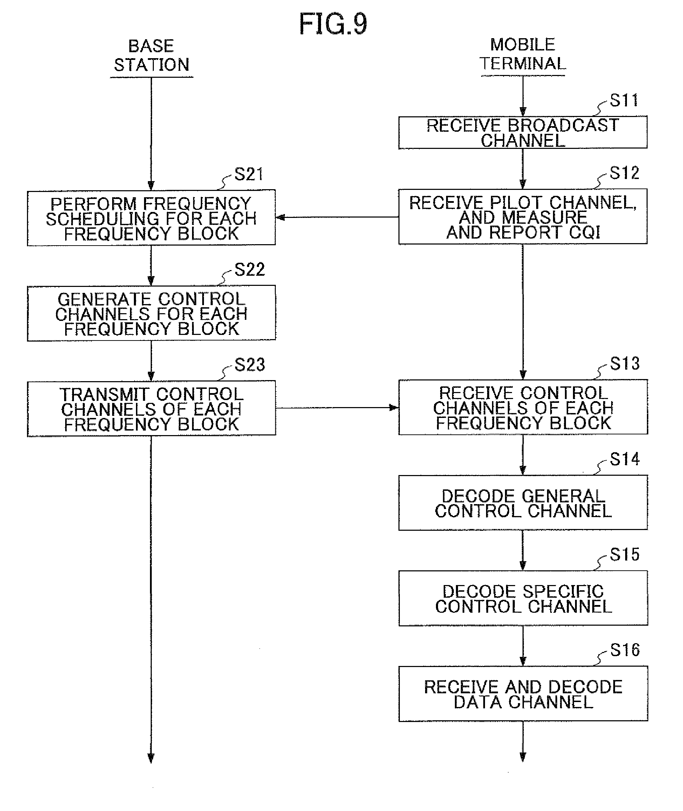

FIG. 9 is a flowchart showing operations of a base station and a mobile terminal according to an embodiment of the present invention. In the descriptions below, it is assumed that a user carrying a mobile terminal UE1 supporting a 10 MHz bandwidth has entered a cell or a sector using a 20 MHz bandwidth for communications. It is also assumed that the minimum frequency band of the communication system is 5 MHz and the entire system frequency band is divided into four frequency blocks 1 through 4 as shown in FIG. 2.

In step S11, the terminal UE1 receives a broadcast channel from the base station and determines frequency blocks that the terminal UE1 is allowed to use. The broadcast channel is, for example, transmitted using a 5 MHz band including the center frequency of the 20 MHz band. This makes it possible for terminals with different receivable bandwidths to easily receive the broadcast channel. For example, the base station allows a user communicating with a 10 MHz bandwidth to use two adjacent frequency blocks, i.e., frequency blocks 1 and 2, 2 and 3, or 3 and 4. The base station may allow the user to use any one or a specific one of the combinations. In this example, it is assumed that the terminal UE1 is allowed to use frequency blocks 2 and 3.

In step S12, the terminal UE1 receives a downlink pilot channel and measures the received signal quality for respective frequency blocks 2 and 3. The received signal quality is measured for each resource block in the respective frequency blocks and the measurements are reported as channel quality indicators (CQIs) to the base station.

In step S21, the base station performs frequency scheduling for each frequency block based on CQIs reported by the terminal UE1 and other terminals. In this example, a data channel for the terminal UE1 is transmitted using frequency blocks 2 and 3. This information is managed by the frequency block allocation control unit 31 (see FIG. 3).

In step S22, the base station generates control signaling channels for each frequency block according to the scheduling information. The control signaling channels include a general control channel and specific control channels.

In step S23, the base station transmits control channels and shared data channels of the respective frequency blocks according to the scheduling information.

In step S13, the terminal UE1 receives signals transmitted via frequency blocks 2 and 3.

In step S14, the terminal UE1 separates a general control channel from control channels received via frequency block 2, decodes the general control channel, and thereby extracts scheduling information. The terminal UE1 also separates a general control channel from control channels received via frequency block 3, decodes the general control channel, and thereby extracts scheduling information. The scheduling information of each of frequency blocks 2 and 3 includes information indicating whether resource blocks are allocated to a shared data channel for the terminal UE1 and if resource blocks are allocated, also includes the corresponding resource block numbers. If no resource block is allocated to shared data channels for the terminal UE1, the terminal UE1 returns to the standby mode and waits for the next control channels. If resource blocks are allocated to a shared data channel for the terminal UE1, the terminal UE1 separates a specific control channel from the received signal and decodes the specific control channel in step S15. The specific control channel includes a data modulation scheme, a channel coding rate, and HARQ information for the shared data channel.

In step S16, the terminal UE1 decodes the shared data channel in the received signal based on information extracted from the specific control channel. The terminal UE1 may be configured to report acknowledge (ACK) or negative acknowledge (NACK) to the base station according to the result of decoding. Thereafter, the above steps are repeated.

### <SECOND EMBODIMENT>

In the first embodiment, control channels are categorized into specific control channels, which are to be decoded and demodulated by terminals to which resource blocks are allocated, and other control channels. The specific control channels are mapped to resources within the corresponding resource blocks allocated to the terminals and the other channels are mapped to resources distributed across the entire frequency band. This method makes it possible to improve the transmission efficiency and reception quality of control channels. However, the present invention is not limited to the method disclosed in the first embodiment.

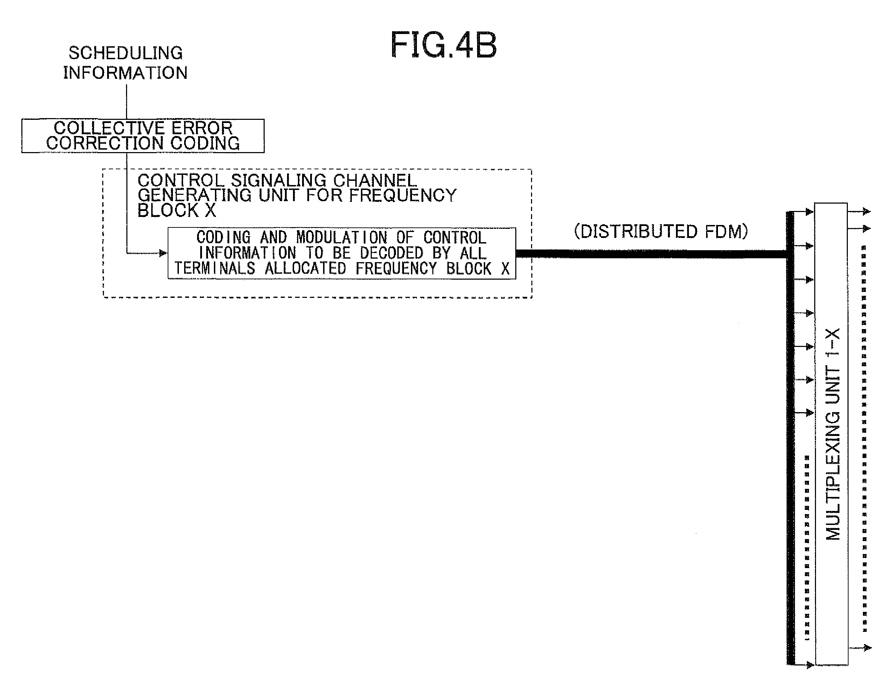

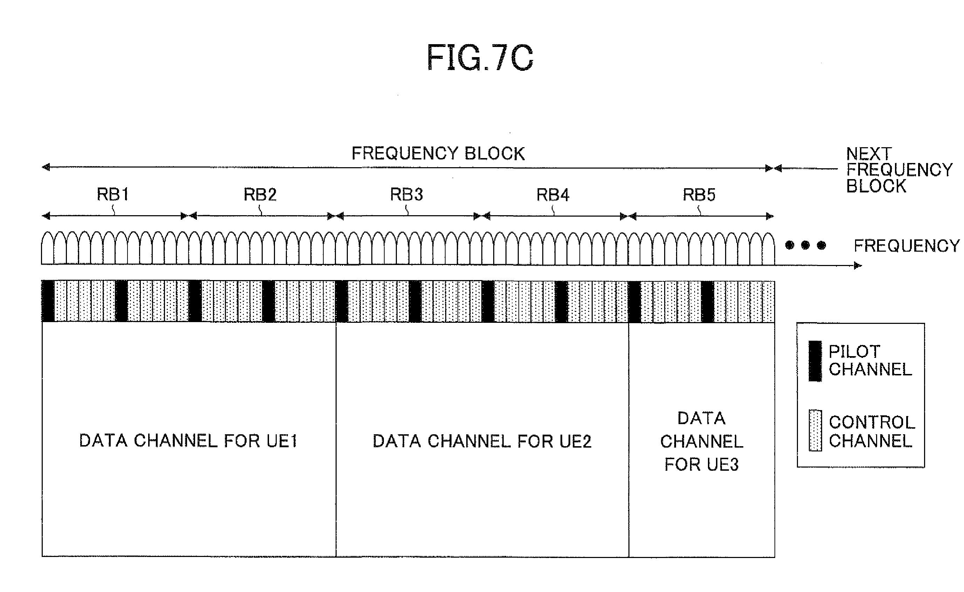

FIG. 7C is a drawing illustrating exemplary mapping of data channels and control channels according to a second embodiment of the present invention. A base station used in this embodiment is substantially the same as that shown in FIG. 3 except that signal processing elements shown in FIG. 4B are mainly used for processing control channels. In this embodiment, specific control information and general control information are not explicitly distinguished and are transmitted using resources distributed across multiple resource blocks in the entire frequency band. In this embodiment, as shown in FIG. 4B, control channels for multiple users are collectively error-correction-coded as a unit. Each user device (typically, a mobile station) decodes and demodulates control channels, determines whether resource blocks are allocated to itself, and decodes a data channel transmitted using the allocated resource blocks according to resource block allocation information.

Assume that 10 bits of control information are transmitted for each of users UE1, UE2, and UE3 to which resource blocks are allocated. In this case, 30 bits of control information for the three users are collectively error-correction-coded as a unit. If the coding rate (R) is 1/2, the size of the error-correction-coded control information becomes 30x2=60 bits. Alternatively, control information for users may be separately error-correction-coded. In this case, the size of the error-correction-coded control information for each user becomes 10x2=20 bits and the total size of control information for the three users becomes 60 bits. In either case, the total size of control information becomes 60 bits. Still, however, because the unit of error correction coding of this embodiment (former case) is three times greater than that of the latter case, the method of this embodiment is preferable in order to increase the coding gain (i.e., to more effectively prevent errors). Also, according to this embodiment, error detection bits (e.g., CRC bits) are attached to the combined 60 bits of error-correction-coded control information. Meanwhile, in the latter case, error detection bits are attached to each 20 bits of error-correction-coded control information. Accordingly, this embodiment is also preferable in terms of reducing the overhead of error detection bits.

### <THIRD EMBODIMENT>

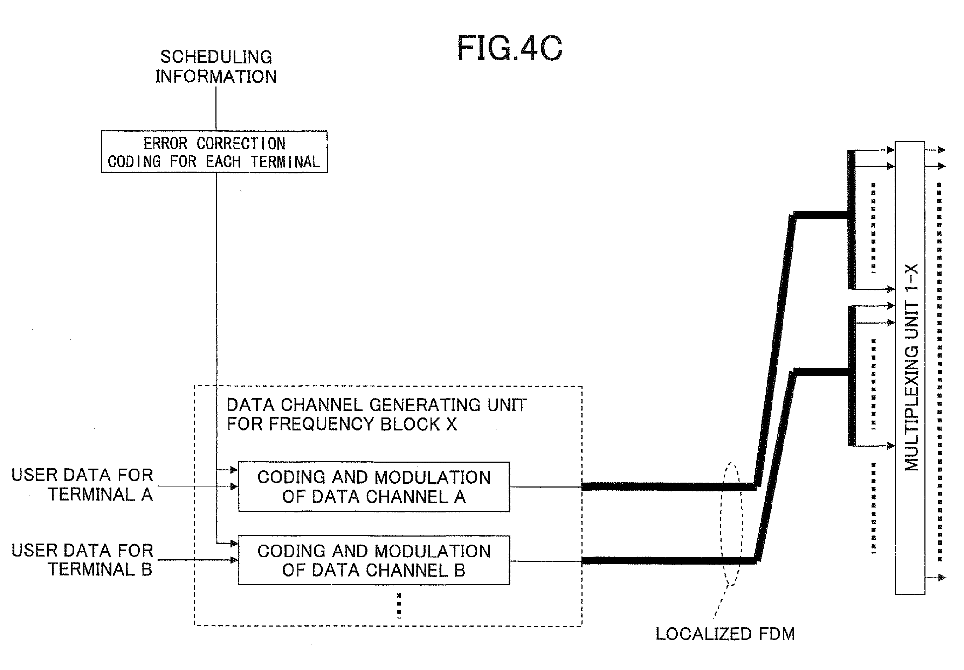

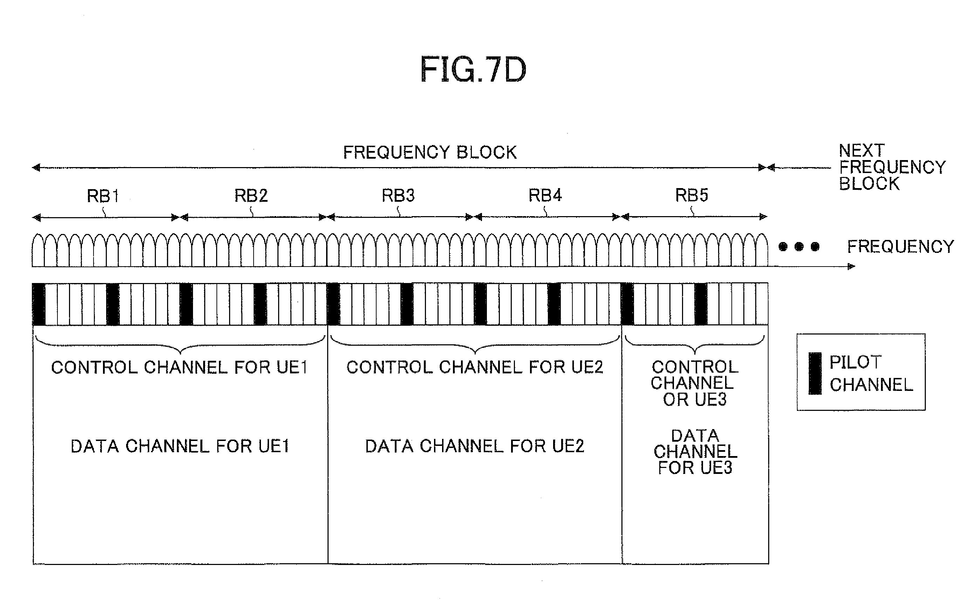

FIG. 7D is a drawing illustrating exemplary mapping of data channels and control channels according to a third embodiment of the present invention. A base station used in this embodiment is substantially the same as that shown in FIG. 3 except that signal processing elements shown in FIG. 4C are mainly used for processing control channels. In this embodiment, similar to the second embodiment, specific control information and general control information are not explicitly distinguished. However, in this embodiment, a control channel for a user is mapped to resources within a resource block(s) allocated to the user. For example, a control channel for user UE1 is mapped to resources in resource blocks RB1 and RB2; a control channel for user UE2 is mapped to resources in resource blocks RB3 and RB4; and a control channel for user UE3 is mapped to resources in resource block RB5. Error correction coding is performed for each user. This is different from the second embodiment where control channels for users UE1 through UE3 are collectively error-correction-coded and mapped to resources across resource blocks RB1 through RB5.

In this embodiment, a control channel and a data channel for a mobile station are mapped to resources within the same resource blocks allocated to the mobile station. Still, before receiving a control channel, a mobile station does not know which resource blocks are allocated to itself. Therefore, each mobile station has to receive all resource blocks to which a control channel for itself is possibly mapped and demodulate all control channels including those for other mobile stations. In the example shown in FIG. 7D, user UE1 demodulates all control channels mapped to resource blocks RB1 through RB5 and thereby determines that resource blocks RB1 and RB2 are allocated to itself.

In the second embodiment, the base station determines transmission power to suit a user in the worst communication environment so that even that user can receive a control channel with desired quality. Accordingly, the transmission quality is higher than necessary for users in moderate or better communication environments and the base station has to consume electric power more than necessary. Meanwhile, in the third embodiment, because error correction coding is performed for each user and a control channel for a user is transmitted using resource blocks allocated to the user, it is possible to perform transmission power control for each user. This in turn prevents the base station from consuming excessive power. Also, because resource blocks are allocated to users with good channel conditions, control channels are transmitted in the same good channel conditions. This in turn improves the reception quality of control channels.

### <FOURTH EMBODIMENT>

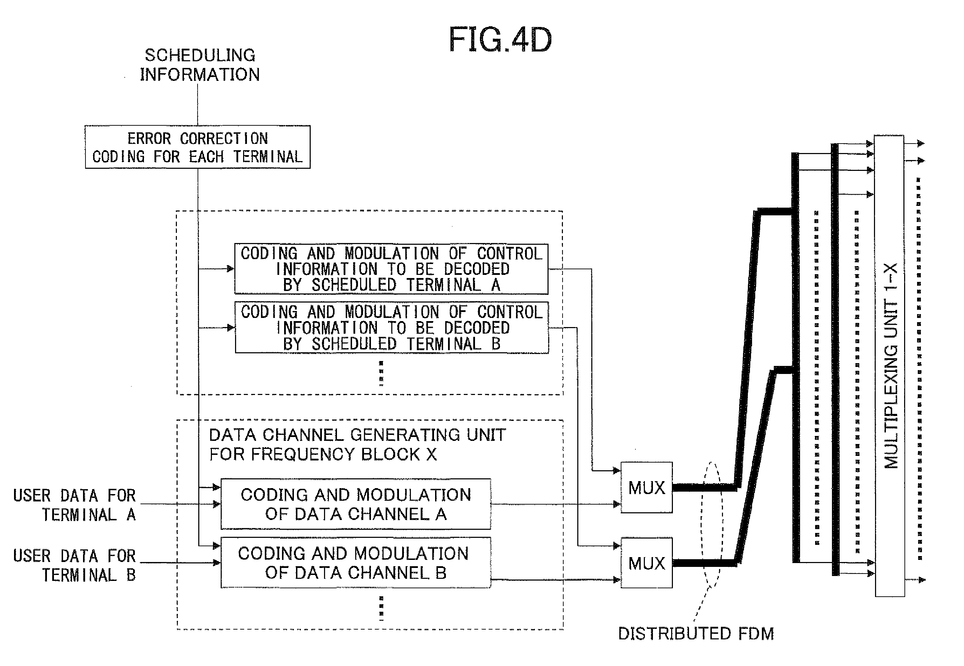

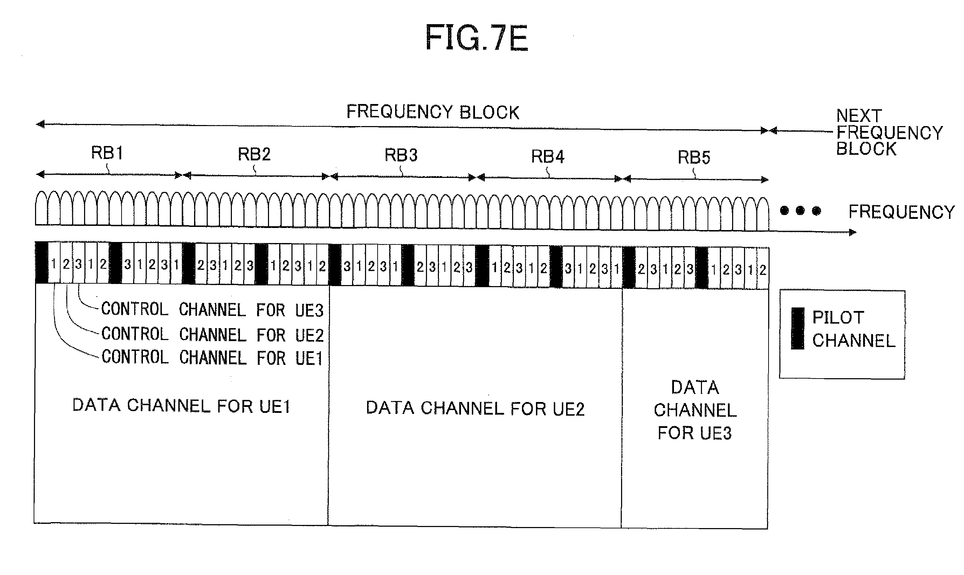

FIG. 7E is a drawing illustrating exemplary mapping of data channels and control channels according to a fourth embodiment of the present invention. A base station used in this embodiment is substantially the same as that shown in FIG. 3 except that signal processing elements shown in FIG. 4D are mainly used for processing control channels. In this embodiment, similar to the third embodiment, specific control information and general control information are not explicitly distinguished, control channels are separately error-correction-coded for respective users, and transmission power is determined for the respective users. This embodiment is different from the third embodiment in that a control channel for a user is mapped to resources distributed across resource blocks allocated to the user as well as other users.

### <FIFTH EMBODIMENT>

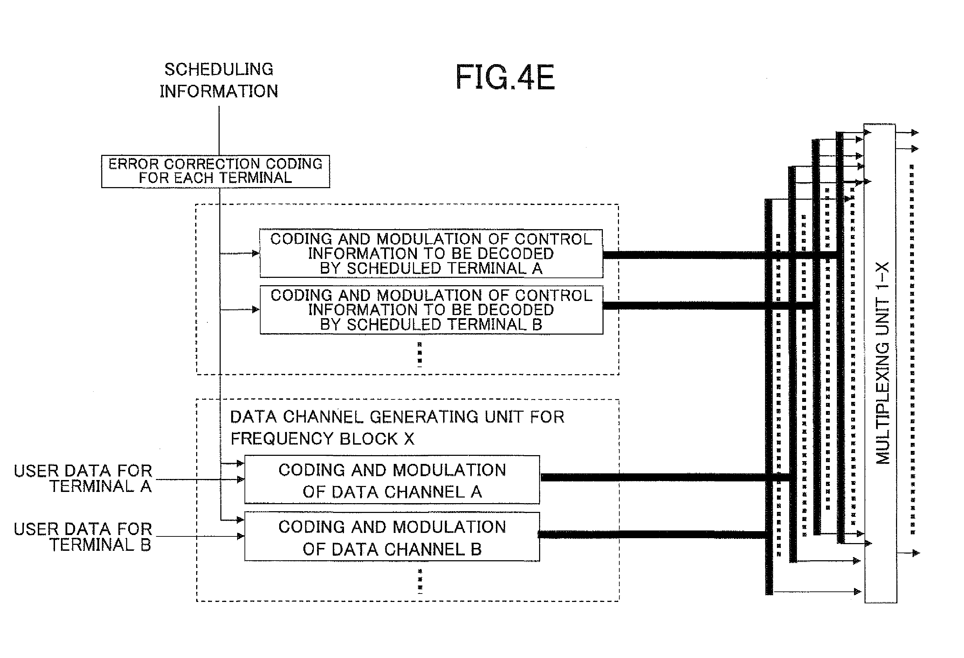

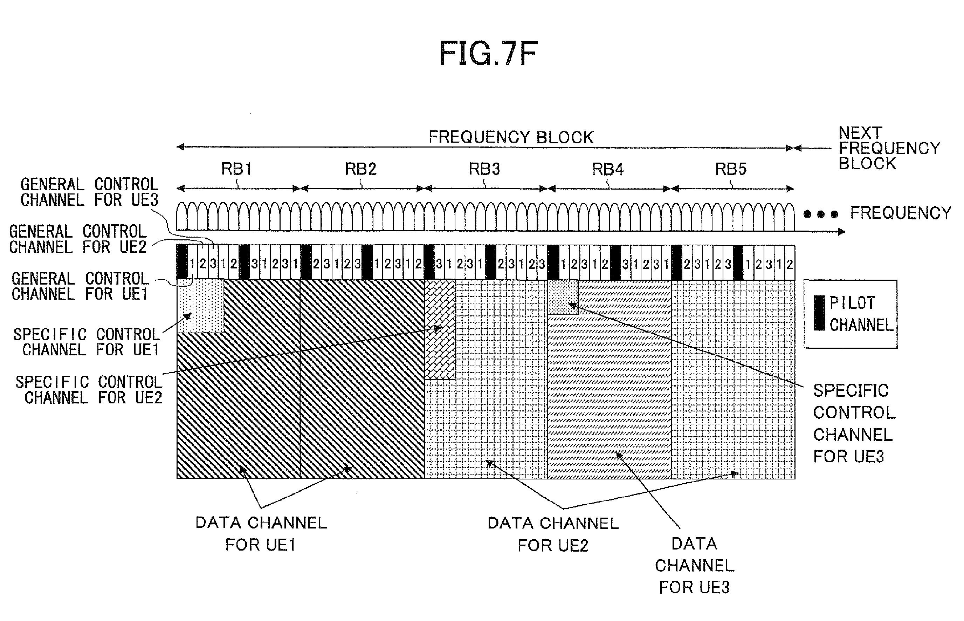

FIG. 7F is a drawing illustrating exemplary mapping of data channels and control channels according to a fifth embodiment of the present invention. A base station used in this embodiment is substantially the same as that shown in FIG. 3 except that signal processing elements shown in FIG. 4E are mainly used for processing control channels.

In this embodiment, specific control information and general control information are explicitly distinguished. Specific control information and general control information are error-correction-coded for respective users, the specific control channels are mapped to resources within resource blocks allocated to the corresponding users (localized FDM), and transmission power is determined for the respective users. Meanwhile, the general control channel is mapped to resources distributed across the entire frequency block. In other words, the general control channel is distributed across a frequency band composed of five resource blocks.

In FIG. 7F, resource blocks RB1 and RB2 are allocated to user 1 (UE1), resource blocks RB3 and RB5 are allocated to user 2 (UE2), and resource block RB4 is allocated to user 3 (UE3). As described above, resource block allocation information is included in the general control channel. The specific control channel for user 1 is mapped to the beginning of resource block RB1 that is allocated to user 1. The specific control channel for user 2 is mapped to the beginning of resource block RB3 that is allocated to user 2. The specific control channel for user 3 is mapped to the beginning of resource block RB4 that is allocated to user 3. Note that, in FIG. 7F, the sizes of the portions occupied by the respective specific control channels of users 1, 2, and 3 are not equal. This indicates that the amount of information in the specific control channel may vary depending on the user. The specific control channel is mapped locally to resources within a resource block allocated to a data channel.

When mapping control channels to resources distributed across multiple resource blocks in the first through fifth embodiments, it is not essential to map the control channels to all resource blocks in the entire frequency band. For example, control channels may be mapped only to odd-numbered resource blocks RB1 and RB3 or mapped only to even-numbered resource blocks. Thus, control channels may be mapped to a selected number of resource blocks that are known to both the base station and the mobile stations. This makes it possible to limit the range of search performed by mobile stations to find the corresponding allocation information.

### <SIXTH EMBODIMENT>

In the second embodiment, as described above, the base station determines transmission power to suit a user in the worst communication environment and therefore the base station has to consume electric power more than necessary. This problem may not occur if communication environments of all users are equally good. In other words, the method of the second embodiment has an advantage in an environment where reception quality levels of users are substantially equal. In a sixth embodiment of the present invention, to take advantage of the method of the second embodiment, user devices in a cell are appropriately categorized into groups, and a frequency band is divided among the groups.

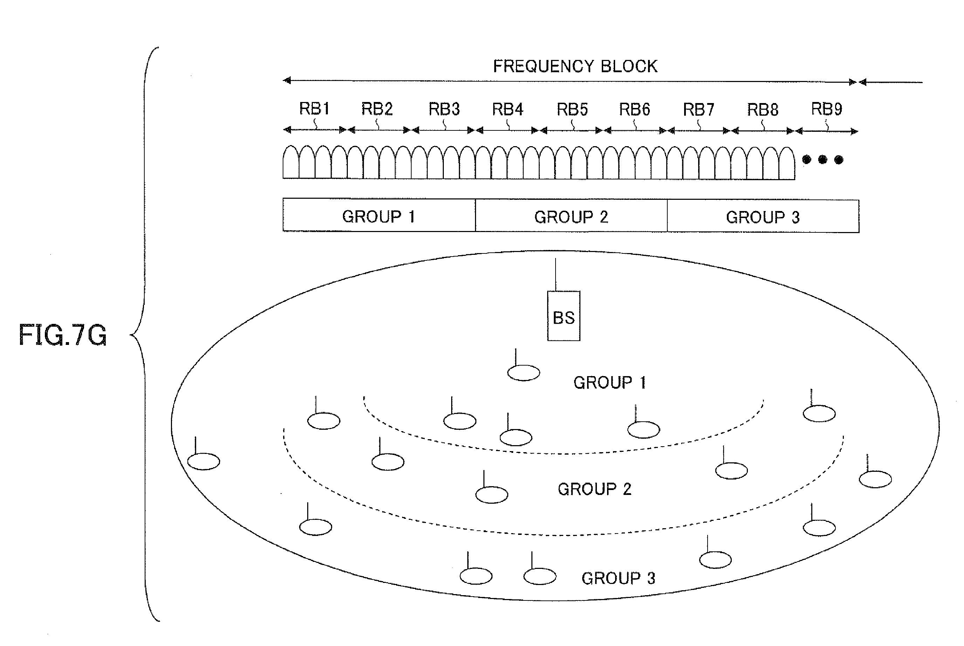

FIG. 7G is a schematic diagram used to describe the sixth embodiment of the present invention. In FIG. 7G, users are categorized into groups 1, 2, and 3 according to their distances from the base station. Resource blocks RB1 through RB3 are allocated to group 1, resource blocks RB4 through RB6 are allocated to group 2, and resource blocks RB7 through RB9 are allocated to group 3. The number of groups and the number of resource blocks are just examples and are not limited to those described above. Any of the methods described in the first through fifth embodiments may be applied to the groups. Grouping users and dividing a frequency band among groups make it possible to reduce the difference in reception quality between the users. This in turn makes it possible to effectively reduce the problem of wasting transmission power of the base station (as seen in the second embodiment). The method of this embodiment may also be preferably used together with the method of the third embodiment because grouping users makes transmission power of control channels in each group substantially equal and thereby enables stable operations of a base station transmitter.

In the example shown in FIG. 7G, to simplify the description, users are categorized into three groups according to their distances from the base station. Alternatively, users may be grouped based on channel quality indicators (CQIs) as well as their distances from the base station. The CQI may be represented by any appropriate indicator, such as SIR or SINR, known in the relevant art.

### <SEVENTH EMBODIMENT>

To improve the received signal quality of control channels, it is preferable to perform link adaptation. In a seventh embodiment of the present invention, transmission power control (TPC) and adaptive modulation and coding (AMC) are used for link adaptation.

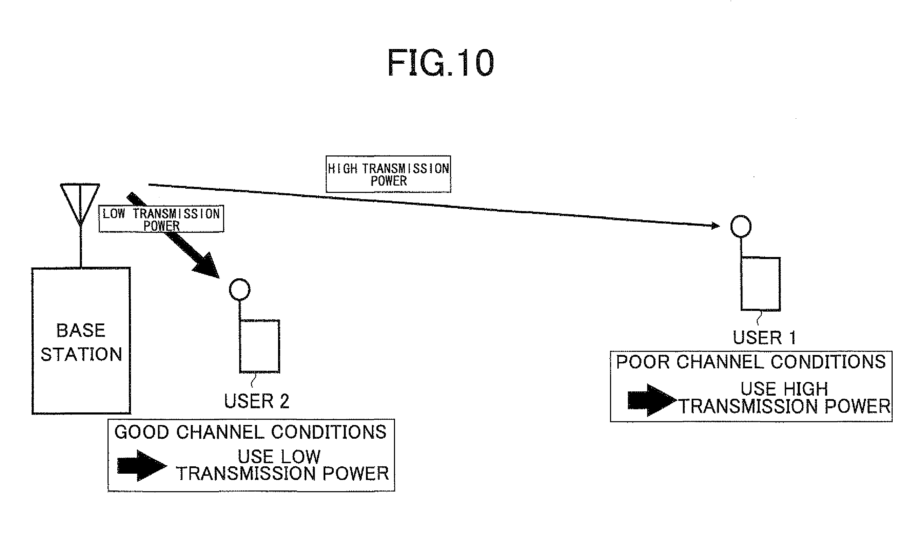

FIG. 10 is a drawing illustrating an example of transmission power control where transmission power of downlink channels is controlled to achieve desired reception quality. For example, high transmission power is used to transmit a downlink channel to user 1 because user 1 is away from the base station and its channel conditions are expected to be poor. Meanwhile, channel conditions of user 2 close to the base station are expected to be good. In this case, using high transmission power to transmit a downlink channel to user 2 may increase the received signal quality at user 2 but may also increase interference with other users. Because the channel conditions of user 2 are good, it is possible to achieve desired reception quality with low transmission power. Therefore, a downlink channel for user 2 is transmitted using comparatively low transmission power. When only transmission power control is employed, a fixed combination of a modulation scheme and a channel coding scheme known to the sending and receiving ends are used. Accordingly, in this case, it is not necessary to provide users with modulation information (such as modulation schemes and channel coding schemes) to be used to demodulate channels.

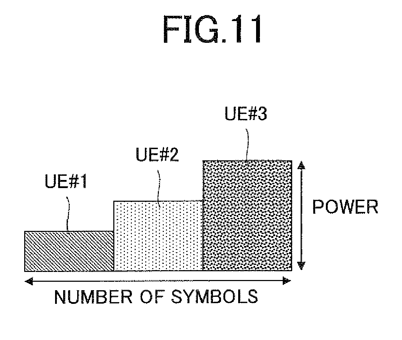

As shown in FIG. 11, when only transmission power control is employed, the difference in reception quality among users is corrected by controlling the transmission power, and the numbers of bits in respective subframes become substantially the same. Here, for example, fixing the coding rate (R) at 1/3 may result in waste of symbols if reception quality is good, but may reduce total transmission power Pₜₒₜₐₗ. Meanwhile, fixing the coding rate (R) at 2/3 may necessitate higher transmission power compared with the case where R is fixed at 1/3, but may reduce the number of symbols necessary.

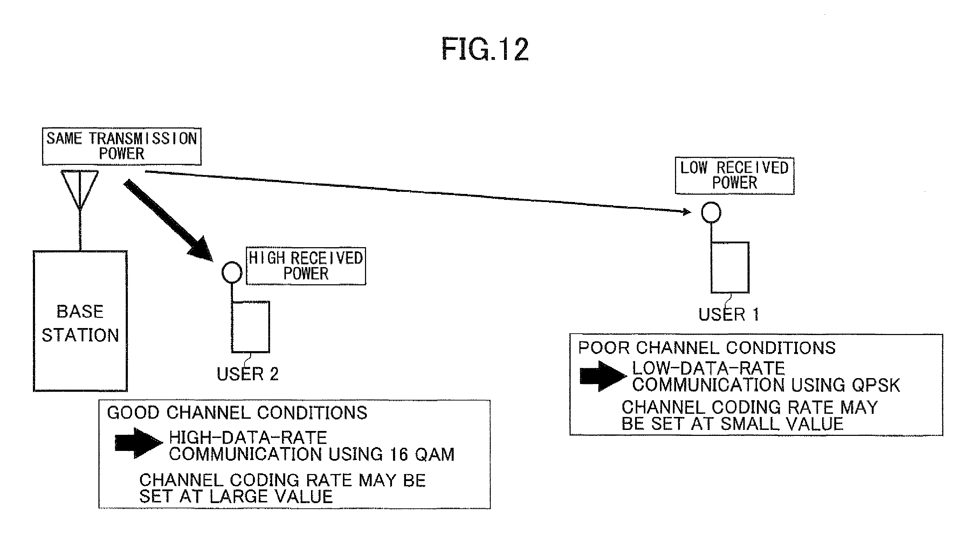

FIG. 12 is a drawing illustrating an example of adaptive modulation and coding (AMC) where one or both of the modulation scheme and the coding scheme are adaptively changed according to channel conditions to achieve desired reception quality. Assuming that the transmission power of the base station is constant, it is expected that channel conditions of user 1 away from the base station are poor. In such a case, the modulation level and/or the channel coding rate is set at a small value.

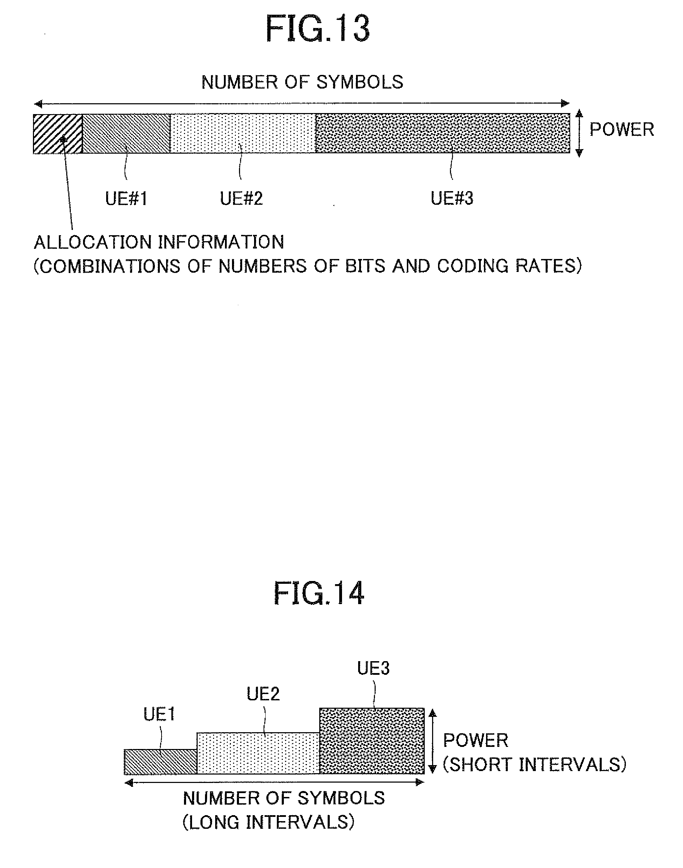

In the example shown in FIG. 12, QPSK is used as the modulation scheme for user 1 and therefore 2 bits of information are transmitted per symbol. On the other hand, the channel conditions of user 2 close to the base station are expected to be good. Therefore, in this case, the modulation level and/or the channel coding rate is set at a large value. In FIG. 12, 16 QAM is used as the modulation scheme for user 2 and therefore 4 bits of information are transmitted per symbol. This method makes it possible to achieve desired reception quality for a user with poor channel conditions by improving the reliability, and to maintain the reception quality and increase the throughput for a user with good channel conditions. When adaptive modulation and coding is employed, modulation information including the modulation scheme, the coding scheme, and/or the number of symbols of a channel is necessary to demodulate the channel. Therefore, it is necessary to send the modulation information to the receiving end by a certain method. For example, as shown in FIG. 13, when only adaptive modulation and coding is employed, it is necessary to report combinations of the numbers of bits and coding rates as allocation information for each subframe.

With this method, the number of bits transmitted per symbol varies depending on the channel conditions. In other words, a small number of symbols are necessary to transmit information when channel conditions are good, but a large number of symbols are necessary to transmit information when channel conditions are poor.

### <EIGHTH EMBODIMENT>

In an eighth embodiment of the present invention, transmission power control is performed for a general control channel to be decoded by an unspecified number of users, and transmission power control and/or adaptive modulation coding is performed for specific control channels to be decoded by users who are allocated resource blocks. The eighth embodiment may be implemented, for example, by any one of the three methods described below.

### (1) TPC-TPC

In a first method, transmission power control is performed for the general control channel and the specific control channels. In this method, a properly received channel can be demodulated without receiving modulation information in advance because the modulation scheme, the coding rate, etc. are fixed. The general control channel is distributed across a frequency block and is therefore transmitted using the same transmission power throughout the entire frequency range. Meanwhile, a specific control channel for a user is mapped to resources within a resource block allocated to the user. Therefore, transmission power of specific control channels may be adjusted individually to improve the received signal quality of users who are allocated resource blocks. In FIGs. 7A, 7B, and 7F, for example, the general control channel is transmitted with transmission power P₀, the specific control channel for user 1 (UE1) is transmitted with transmission power P₁ suitable for user 1, the specific control channel for user 2 (UE2) is transmitted with transmission power P₂ suitable for user 2, and the specific control channel for user 3 (UE3) is transmitted with transmission power P₃ suitable for user 3. In this case, shared data channels may be transmitted using the corresponding transmission powers P₁, P₂, and P₃ or a different transmission power P_{D}.

As described above, the general control channel is decoded by all users. Also, the purpose of the general control channel is to report the presence of data and the scheduling information to users to which resource blocks are allocated. Therefore, the transmission power used to transmit the general control channel may be adjusted to achieve desired reception quality for the users to which resource blocks are allocated. For example, in FIGs. 7A, 7B, and 7F, if all users 1, 2, and 3 who are allocated resource blocks are located near the base station, transmission power P₀ for the general control channel may be set at a comparatively small value. In this case, a user other than users 1, 2, and 3 who is located, for example, at a cell edge may not be able to decode the general control channel properly. However, this does not cause any practical problem because no resource block is allocated to the user.

### (2) TPC-AMC

In a second method, transmission power control is performed for the general control channel and adaptive modulation and coding is performed for the specific control channels. When AMC is employed, it is basically necessary to provide users with modulation information in advance. In this method, modulation information for the specific control channels is included in the general control channel. Each user receives, decodes, and demodulates the general control channel first, and determines whether data for the user are present. If data are present, the user extracts scheduling information as well as modulation information including a modulation scheme, a coding scheme, and the number of symbols of the specific control channel. Then, the user demodulates the specific control channel according to the scheduling information and the modulation information and thereby obtains modulation information of a shared data channel to demodulate the shared data channel.

Control channels require lower throughput compared with shared data channels. Therefore, the number of combinations of modulation and coding schemes for AMC of a general control channel may be smaller than that used for a shared data channel. For example, for AMC of a general control channel, QPSK is statically used as the modulation scheme and the coding rate may be selected from 7/8, 3/4, 1/2, and 1/4.

The second method makes it possible to provide the general control channel with moderate quality for all users as well as to improve the quality of the specific control channels. This is achieved by mapping specific control channels to resource blocks providing good channel conditions for respective communication terminals and by using appropriate modulation schemes and/or coding schemes for the respective communication terminals. Thus, in this method, adaptive modulation and coding is applied to specific control channels to improve their reception quality.

When only a small number of combinations of modulation schemes and channel coding rates are used, a receiving end may be configured to try all of the combinations to demodulate a specific control channel and to use properly demodulated information. This approach makes it possible to perform a certain level of AMC without providing users with modulation information in advance.

### (3) TPC-TPC/AMC

In a third method, transmission power control is performed for the general control channel, and both transmission power control and adaptive modulation and coding are performed for the specific control channels. As described above, when AMC is employed, it is basically necessary to provide users with modulation information in advance. Also, it is preferable to provide a large number of combinations of modulation schemes and channel coding rates to achieve desired reception quality even when the degree of fading is high. However, using a large number of combinations complicates the process of determining an appropriate combination, increases the amount of information needed to report the combination, and thereby increases the processing workload and overhead. In the third method, reception quality is maintained by a combination of TPC and AMC. In other words, it is not necessary to compensate for all the fading solely by AMC. Specifically, a modulation scheme and a coding scheme that nearly achieve desired quality are selected and then transmission power is adjusted to achieve the desired quality under the selected modulation scheme and coding scheme. This method makes it possible to reduce the number of combinations of modulation schemes and channel coding schemes.

In other words, in the third method, a long term variation or the difference in reception quality among users is corrected by changing the modulation scheme and the coding rate (AMC); and an instantaneous variation or the difference in instantaneous reception quality is corrected by adjusting the transmission power (TPC). As shown in FIG. 14, the number of bits per subframe and the coding rate are changed at long intervals as needed and the transmission power is changed at short intervals as needed. In this case, boundaries of symbols for respective mobile stations are reported to the respective mobile stations by a signaling channel of a higher layer

In all of the three methods described above, only transmission power control is performed for the general control channel. Therefore, the user can receive the general control channel with desired reception quality and also can easily obtain control information from the general control channel. Unlike AMC, transmission power control does not change the amount of information transmitted per symbol and therefore the information can be easily transmitted using a fixed format. Because the general control channel is distributed across a frequency block or multiple resource blocks, high frequency diversity gain can be expected. This in turn makes it possible to achieve enough reception quality by simple transmission power control where a long-period average transmission power level is adjusted. Meanwhile, including AMC control information (modulation information) for specific control channels in a general control channel makes it possible to perform AMC for the specific control channels and thereby makes it possible to improve the transmission efficiency and quality of the specific control channels. While the number of symbols necessary for a general control channel is substantially constant, the number of symbols necessary for a specific control channel varies depending on the modulation scheme, the coding rate, the number of antennas, and so on. For example, assuming that the number of necessary symbols is N when the channel coding rate is 1/2 and the number of antennas is 1, the number of necessary symbols becomes 4N when the channel coding rate is 1/4 and the number of antennas is 2. According to this embodiment, it is possible to transmit a control channel using a simple fixed format as shown in FIG. 7A, 7B, or 7F even if the number of symbols necessary for the control channel is changed. Although the number of symbols necessary for a specific control channel changes, the number of symbols necessary for a general control channel does not change. Therefore, it is possible to flexibly cope with the variation in the number of symbols by changing the resource ratio of the specific control channel to the shared data channel in a given resource block.

### (4) TPC/AMC-TPC/AMC

In a fourth method, both transmission power control and adaptive modulation and coding are performed for the general control channel and the specific control channels. As described above, when AMC is employed, it is basically necessary to provide users with modulation information in advance.

In this method, a long term variation or the difference in reception quality among users is corrected by changing the modulation scheme and the cording rate (AMC); and an instantaneous variation or the difference in instantaneous reception quality is corrected by adjusting the transmission power (TPC). As shown in FIG. 14, the number of bits per subframe and the coding rate are changed at long intervals as needed and the transmission power is changed at short intervals as needed. In this case, boundaries of symbols for respective mobile stations are reported to the respective mobile stations by a signaling channel of a higher layer

When general control information and specific control information are distinguished, in other words, when general control information and specific control information are encoded and transmitted separately, the mobile station separates a general control channel from control channels, decodes the general control channel, and thereby extracts scheduling information. The mobile station also separates and decodes a specific control channel in the received signal.

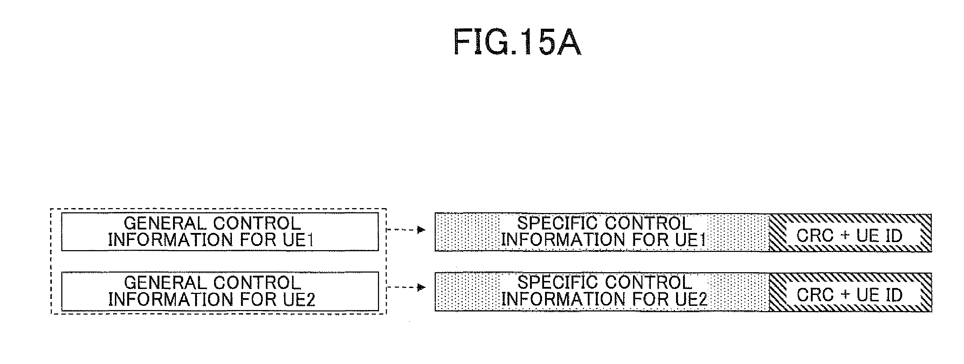

In this method, as shown in FIG. 15A, no error-detecting code is attached to general control information to be transmitted via a general control channel, but an error-detecting code including a cyclic redundancy check (CRC) code and a user ID (UE-ID) is attached to specific control information to be transmitted via a specific control channel. A receiving terminal multiplies the error-detecting code by its own ID (UE-ID) to convert the error-detecting code into the CRC code and performs error detection. This approach makes it possible to perform error detection in one process and also makes it possible to reduce the number of control bits.

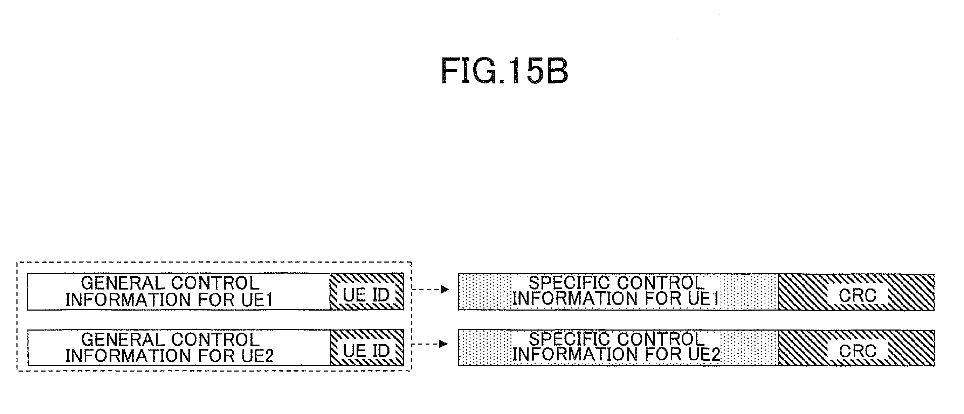

In another example shown in FIG. 15B, a user ID (UE-ID) is attached to general control information to be transmitted via a general control channel and a cyclic redundancy check (CRC) code is attached to specific control information to be transmitted via a specific control channel. A receiving terminal performs error detection of the general control channel using its own ID (UE-ID) and decodes the general control channel. Then, if resource blocks are allocated to the terminal, the terminal performs error detection of the corresponding specific Control channel using the attached CRC code. Thus, compared with the example shown in FIG. 15A, attaching UE-IDs to the general control channel and attaching a CRC code to the specific control channel makes it possible to reduce the workload of the decoding process.

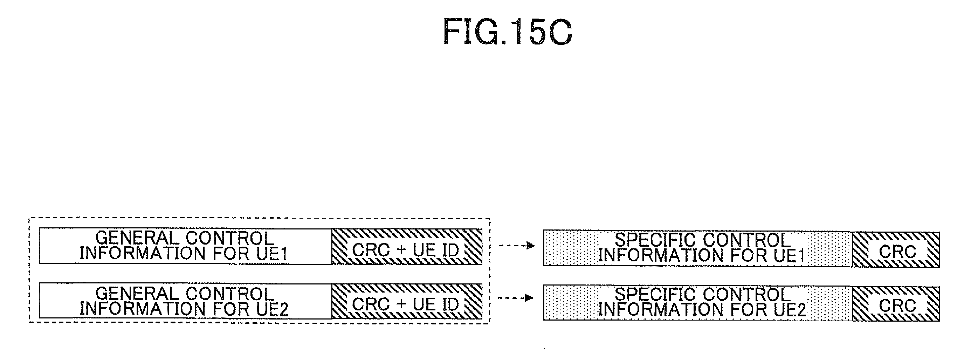

In still another example shown in FIG. 15C, an error-detecting code including a cyclic redundancy check (CRC) code and a user ID (UE-ID) is attached to general control information to be transmitted via a general control channel and a cyclic redundancy check (CRC) code is attached to specific control information to be transmitted via a specific control channel. A receiving terminal multiplies the error-detecting code by its own ID (UE-ID) to convert the error-detecting code into the CRC code and performs error detection of the general control channel. Then, if resource blocks are allocated to the terminal, the terminal performs error detection of the corresponding specific control channel using the attached CRC code. Thus, compared with the example shown in FIG. 15A, attaching a CRC code and a UE-ID to the general control channel and attaching a CRC code to the specific control channel makes it possible to reduce the workload of the decoding process.

Although the present invention is described above in different embodiments, the distinctions between the embodiments are not essential for the present invention, and the embodiments may be used individually or in combination. Although specific values are used in the above descriptions to facilitate the understanding of the present invention, the values are just examples and different values may also be used unless otherwise mentioned.

Although functional block diagrams are used to describe devices in the above embodiments, those devices may be implemented by hardware, software, or a combination of them. The present invention is not limited to the specifically disclosed embodiments, and variations and modifications may be made without departing from the scope of the present invention.

The present international application claims priority from Japanese Patent Application No. 2006-169448 filed on June 19, 2006, the entire contents of which are hereby incorporated herein by reference.

### INDUSTRIAL APPLICABILITY

A mobile station, a base station, and a downlink resource allocation method according to embodiments of the present invention may be applied to a wireless communication system.

## Claims

1. A base station employing a multicarrier scheme and designed to perform frequency scheduling in a frequency band including multiple resource blocks each including one or more subcarriers, the base station comprising:
a frequency scheduler configured to receive channel condition information from communication terminals and to generate scheduling information to allocate one or more of the resource blocks to each of selected ones of the communication terminals having good channel conditions based on the channel condition information;
a coding and modulation unit configured to encode and modulate control channels including a general control channel to be decoded by the communication terminals and specific control channels to be decoded by the selected ones of the communication terminals that are allocated one or more of the resource blocks;
a multiplexing unit configured to time-division-multiplex the general control channel and the specific control channels according to the scheduling information; and
a transmitting unit configured to transmit an output signal from the multiplexing unit according to the multicarrier scheme;
wherein the coding and modulation unit is configured to encode the general control channel separately for the respective communication terminals.

2. The base station as claimed in claim 1, wherein
the general control channel is mapped to resources distributed across the frequency band; and
the specific control channels for the selected ones of the communication terminals are mapped locally to resources within the corresponding resource blocks allocated to the selected ones of the communication terminals.

3. The base station as claimed in claim 1,
wherein a downlink pilot channel is also mapped to resources distributed across the frequency band.

4. The base station as claimed in claim 1,
wherein the general control channel and the specific control channels are error-correction-coded separately.

5. The base station as claimed in claim 4,
wherein an error-detecting code including a CRC code and a communication terminal ID is attached to each of the specific control channels.

6. The base station as claimed in claim 4,
wherein a communication terminal ID is attached to the general control channel and a CRC code is attached to each of the specific control channels.

7. The base station as claimed in claim 4,
wherein an error-detecting code including a CRC code and a communications terminal ID is attached to the general control channel and a CRC code is attached to each of the specific control channels.

8. The base station as claimed in claim 1,
wherein the general control channel includes one or more of identification information of the communication terminals, resource block allocation information, and the numbers of antennas used for communications.

9. The base station as claimed in claim 1,
wherein each of the specific control channels includes one or more of information indicating a modulation scheme of a data channel, information indicating a coding scheme of the data channel, and automatic repeat request information.

10. The base station as claimed in claim 1,
wherein
transmission power control is performed for the general control channel; and
one or both of transmission power control and adaptive modulation and coding are performed for the specific control channels.

11. The base station as claimed in claim 10,
wherein transmission power control is performed for the general control channel so that the selected ones of the communication terminals are able to receive the general control channel with high quality.

12. The base station as claimed in claim 10,
wherein the general control channel includes one or both of modulation schemes and coding schemes applied to the respective specific control channels.

13. A transmission method used by a base station employing a multicarrier scheme and designed to perform frequency scheduling, the method comprising the steps of:
receiving channel condition information from communication terminals and generating scheduling information to allocate one or more of resource blocks each including one or more subcarriers to each of selected ones of the communication terminals having good channel conditions based on the channel condition information;
encoding and modulating control channels including a general control channel to be decoded by the communication terminals and specific control channels to be decoded by the selected ones of the communication terminals that are allocated one or more of the resource blocks, wherein the general control channel is encoded separately for the respective communication terminals;
time-division-multiplexing the general control channel and the specific control channels according to the scheduling information; and
transmitting the time-division-multiplexed signal according to the multicarrier scheme.

14. A communication terminal used in a communication system where a multicarrier scheme is employed and frequency scheduling is performed, the communication terminal comprising:
a receiving unit configured to receive control channels including a general control channel to be decoded by communications terminals and specific control channels to be decoded by selected ones of the communication terminals to each of which one or more resource blocks are allocated;
a separating unit configured to separate the general control channel and the specific control channels that are time-division-multiplexed;
a control channel decoding unit configured to decode the general control channel and to decode a corresponding one of the specific control channels that is mapped to the one or more of the resource blocks allocated to the own communication terminal based on resource block allocation information in the general control channel; and
a data channel decoding unit configured to decode a data channel transmitted using the one or more of the resource blocks allocated to the own communication terminal.

15. A reception method used by a communication terminal in a communication system where a multicarrier scheme is employed and frequency scheduling is performed, the method comprising the steps of:
receiving control channels including a general control channel to be decoded by communication terminals and specific control channels to be decoded by selected ones of the communication terminals to each of which one or more resource blocks are allocated;
separating the general control channel and the specific control channels that are time-division-multiplexed;
decoding the general control channel and decoding a corresponding one of the specific control channels that is mapped to the one or more of the resource blocks allocated to the own communication terminal based on resource block allocation information in the general control channel; and
decoding a data channel transmitted using the one or more of the resource blocks allocated to the own communication terminal.
